# EUROPEAN PATENT SPECIFICATION

(11) **EP 3 480 440 B1**
(45) Date of publication and mention of the grant of the patent: **15.07.2020**
(21) Application number: 18203899.2
(22) Date of filing: 31.10.2018
(51) Int. Cl.: F02B 37/24, F02B 37/18, F01N 3/023, F02B 37/22, F01N 9/00, F02D 41/02, F02D 41/00, F02B 37/12

(54) **GUARD BAND CONTROL OF AN ACTUATOR IN A TURBOCHARGER**
SCHUTZBANDSTEUERUNG EINES AKTUATORS IN EINEM TURBOLADER
RÉGULATION DE LA BANDE DE GARDE D'UN ACTIONNEUR DANS UN TURBOCOMPRESSEUR

(30) Priority: 01.11.2017 US 201715800994
(43) Date of publication of application: 08.05.2019
(73) Proprietor: BorgWarner Inc., Auburn Hills, MI 48326 (US)
(72) Inventor: HOWELL, Ryan Thomas, Hendersonville, NC 28791 (US); CARTER, Jeffrey, West Yorkshire WF14 8DJ (GB)
(74) Representative: Peterreins Schley

(56) References cited:
- EP-A1- 2 700 797
- DE-A1-102011 084 086
- DE-T5-112013 001 678
- DE-U1-202014 007 678

## Description

### Field of Disclosure

The present disclosure relates generally to turbochargers, and more particularly to control of actuators for such turbochargers.

### Background of Disclosure

Some machines such as, but not limited to, automobiles, trucks, aircraft, locomotives, ships, and auxiliary power generators, utilize a turbocharger to increase the efficiency and power output of internal combustion engines powering such machines. Exhaust gas from the engine drives a turbine of the turbocharger, which in turn, drives an impeller of a compressor of the turbocharger. The compressor draws in ambient air, compresses the air, and then supplies the compressed air to the engine. In this manner, the engine may have improved fuel economy, reduced emissions, and higher power and torque.

Some turbochargers, utilize wastegate valves and some other turbochargers utilize adjustable guide vanes, such as in variable turbine geometry turbochargers as an example, to regulate the gas flow leading to the turbine wheel. For example, the adjustable guide vanes may be pivotable between an upper vane ring and a lower vane ring and be mechanically engaged with an adjustment ring via a plurality of vane levers. The adjustment ring may be actuated to rotate with respect to the upper vane ring such that the rotation of the adjustment ring engages the plurality of vane levers to simultaneously pivot all of the adjustable guide vanes between a closed position and an open position.

In general, during normal operation of the turbocharger, an actuator may limit the upper limit and the lower limit span of the plurality of vanes to prevent the vanes from impacting mechanical stops. During normal usage, however, the aftertreatment system downstream of the turbocharger may become clogged and an aftertreatment regeneration cycle may be initiated to unclog the aftertreatment system. In some designs, to achieve a more efficient and effective aftertreatment regeneration cycle, the actuator may adjust the plurality of vanes to pivot beyond the span limit to restrict the exhaust gas flow to create heat needed to clean the aftertreatment system.

An example may be found in EP Patent No. 1 515 021 B1, which discloses a control apparatus for a variable capacity turbocharger. The '021 patent discloses a method of controlling exhaust gas flow to and from a turbocharger during a regeneration cycle. During the regeneration cycle, the actuator increases the span of the vanes beyond the base value span. While effective, during the regeneration cycle, rattling or vibration of the vanes may occur while in the increased span.

DEI 12013001678T5 relates to methods and systems for an engine system for a vehicle. In one example, the engine system includes a turbocharger with a turbine, wherein the turbocharger is configured to be driven by an exhaust from an engine during a turbocharger mode and by the exhaust from the engine and by a mechanical output of the engine during a boost mode. The engine system further includes a bypass control to reduce, in a regeneration mode of operation, an amount of energy extracted from exhaust flow passing through the turbine and to increase an amount of energy withdrawn from exhaust flow through the turbine during a non-regeneration mode of operation. Additionally, the engine system includes an aftertreatment system located downstream of the turbocharger and including a particulate filter.

DE202014007678U discloses a turbocharger system for an internal combustion engine comprising a variable geometry turbine having movable vanes. The turbocharger system further comprises an electric actuator coupled to rotate the movable vanes, and an electronic controller adapted to operate the electric actuator to rotate the movable vanes until they reach a mechanical stop corresponding to a fully open position. A position sensor learns the position value of the movable vanes, once the have reached the mechanical stop.

### Summary of Disclosure

In accordance with an aspect of the disclosure, a variable position device for a turbocharger includes a turbine. A fluid diverter for diverting exhaust gas flow to the turbine is moveable inclusively between a first end-stop position and a second end-stop position, wherein the first and second end-stop positions define an end-stop span. An actuator is in operable association with the fluid diverter. The actuator is configured to, in an operation mode, selectively move the fluid diverter inclusively between a first guard band position and a second guard band position, wherein the first and second guard band positions define a guard band span wherein the guard band span is less than the end-stop span. The actuator is configured to, in a first mode, move the fluid diverter to a first reduced guard band position, wherein the first reduced guard band position is inclusively between the first end-stop position and the first guard band position, and apply a constant force to the fluid diverter to hold the fluid diverter in the first reduced guard band position.

For reference only, a turbocharger is provided. The turbocharger includes a turbine wheel. A plurality of vanes is disposed upstream of the turbine wheel. The plurality of vanes is pivotally moveable inclusively between a first end-stop position and a second end-stop position, wherein the first and second end-stop positions define an end-stop span. An actuator is in operable association with the plurality of vanes. The actuator is configured to, in an operation mode, selectively move the plurality of vanes inclusively between a first guard band position and a second guard band position, wherein the first and second guard band positions define a guard band span wherein the guard band span is less than the end-stop span. The actuator is configured to, in a first mode, pivotally move the plurality of vanes to a first reduced guard band position, wherein the first reduced guard band position is inclusively between the first end-stop position and the first guard band position, and apply a constant force to the plurality of vanes to hold the plurality of vanes in the first reduced guard band position.

For reference only, a method of controlling exhaust gas flow to a turbine wheel of a turbocharger is provided. The turbocharger comprises a plurality of vanes pivotally moveable inclusively between a first end-stop position and a second end-stop position, wherein the first and second end-stop positions define an end-stop span. An actuator is in operable communication with the plurality of vanes and in communication with an engine control unit. The actuator is configured to, in operation mode, selectively move the plurality of vanes inclusively between a first guard band position and a second guard band position, wherein the first guard band position and second guard band position define a guard band span, and wherein the guard band span is less than the end-stop span. The method entails actuating the actuator to, responsive to receiving a first mode signal from the engine control unit, pivotally move the plurality of vanes to a first reduced guard band position, the first reduced guard band position being inclusively between the first end-stop position and the first guard band position. Another step is applying a constant force to, responsive to receiving the first mode signal from the engine control unit, the plurality of vanes via the actuator to hold the plurality of vanes in the first reduced guard band position.

These and other aspects and features of the present disclosure may be better appreciated by reference to the following detailed description and accompanying drawings.

### Brief Description of Drawings

FIG. 1 is an axial cross-sectional view of an exemplary turbocharger, in accordance with an embodiment of the present disclosure;
FIG. 2 is a perspective view, with portions broken and sectioned away, of an exemplary turbocharger, in accordance with an embodiment of the present disclosure;
FIG. 3 is a block diagram illustrating an exemplary turbocharger utilized in conjunction with an engine and an aftertreatment system, in accordance with an embodiment of the present disclosure;
FIG. 4 is a cross-sectional view, with portions broken and sectioned away, illustrating the plurality of vanes in a first end-stop position, in accordance with an embodiment of the present disclosure;
FIG. 5 is a cross-sectional view, with portions broken and sectioned away, illustrating the plurality of vanes in a second end-stop position with the first end-stop position illustrated in phantom, in accordance with an embodiment of the present disclosure, in accordance with an embodiment of the present disclosure;
FIG. 6 is a cross-sectional view, with portions broken and sectioned away, illustrating the plurality of vanes in a first guard band position, in accordance with an embodiment of the present disclosure, in accordance with an embodiment of the present disclosure;
FIG. 7 is a cross-sectional view, with portions broken and sectioned away, illustrating the plurality of vanes in a second guard band position with the first guard band position illustrated in phantom, in accordance with an embodiment of the present disclosure, in accordance with an embodiment of the present disclosure;
FIG. 8 is a cross-sectional view, with portions broken and sectioned away, illustrating the plurality of vanes in a first reduced guard band position, in accordance with an embodiment of the present disclosure, in accordance with an embodiment of the present disclosure;
FIG. 9 is a cross-sectional view, with portions broken and sectioned away, illustrating the plurality of vanes in a second reduced guard band position with the first reduced guard band position illustrated in phantom, in accordance with an embodiment of the present disclosure, in accordance with an embodiment of the present disclosure;
FIG. 10 is a block diagram illustrating an exemplary turbocharger utilized in conjunction with an engine and an aftertreatment system illustrating an exemplary alternative fluid diverter, in accordance with an embodiment of the present disclosure;
FIG. 11 is a schematic diagram illustrating the various positions of the wastegate valve, in accordance with an embodiment of the present disclosure; and
FIG. 12 is a flowchart illustrating a sample sequence which may be practiced in accordance with the teachings of the present disclosure.

It should be understood that the drawings are not to scale, and that the disclosed embodiments are illustrated only diagrammatically and in partial views. It should also be understood that this disclosure is not limited to the particular embodiments illustrated herein.

### Detailed Description

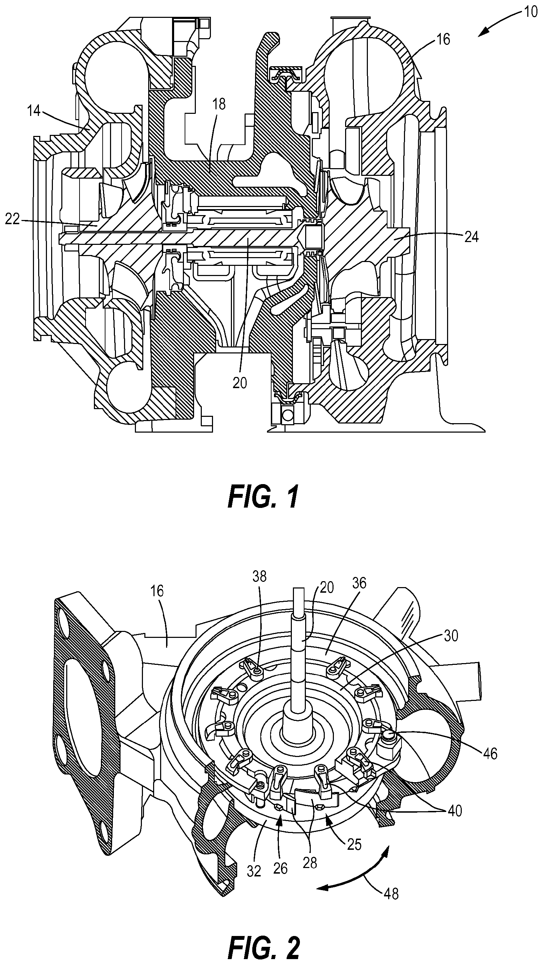

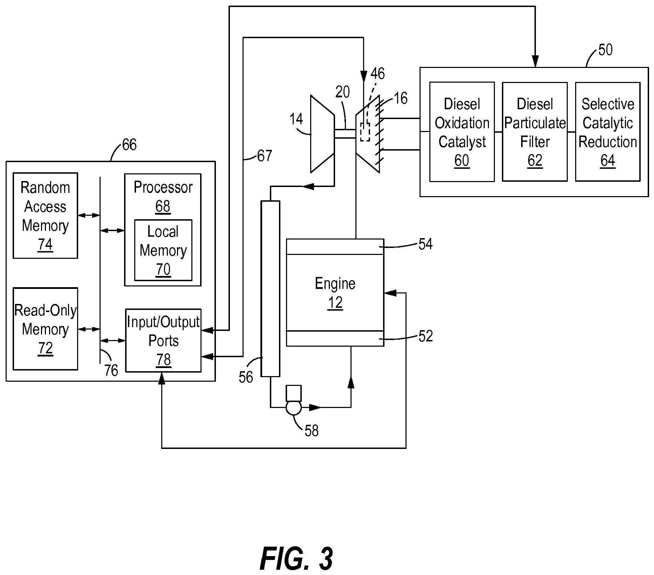

Referring now to FIG. 1, an exemplary turbocharger is generally referred to by reference numeral 10. The turbocharger 10 may be utilized in conjunction with an internal combustion engine 12 (shown in FIG. 3) of a machine such as, but not limited to, an automobile, a truck, an aircraft, a locomotive, a ship, and an auxiliary power generator. The turbocharger 10 increases the power output of such internal combustion engines by extracting power from the exhaust gases of the engine to compress the air to be delivered to the air intake of the engine such that the compressed air may mix with fuel and be burned in the engine. The turbocharger 10 includes a compressor housing 14, a turbine housing 16, and a bearing housing 18 arranged between the compressor housing 14 and the turbine housing 16. The bearing housing 18 supports a rotatable shaft 20. A compressor wheel 22 is arranged in the compressor housing 14 and may be rotatably driven via the shaft 20 by a turbine wheel 24 arranged in the turbine housing 16.

With reference to FIGS. 1-2, the illustrated turbocharger 10 includes a variable position device 25 such as a fluid diverter 26. In the illustrated embodiment, the fluid diverter 26 includes a plurality of vanes 28 arranged in the turbine housing 16 to adjust airflow passing to the turbine wheel 24. The plurality of vanes 28 are arranged between an upper vane ring 30 and a lower vane ring 32. While secured in the turbine housing 16, the upper vane ring 30 is disposed proximate the bearing housing 18.

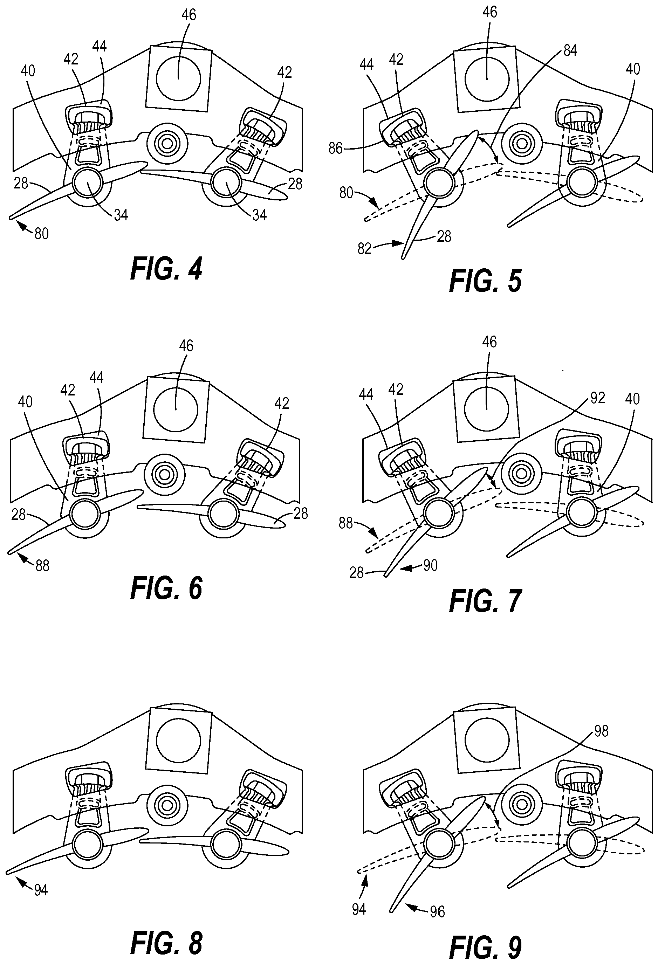

With particular reference to FIG. 2, in the illustrated embodiment, each vane of the plurality of vanes 28 has an airfoil shape. Each vane of the plurality of vanes 28 is mounted to a vane post 34 (shown in FIG. 4) that is arranged between, and pivotally coupled to, both the upper vane ring 30 and the lower vane ring 32. An adjustment ring 36 is arranged proximate the upper vane ring 30 such that the outer circumference of the adjustment ring 36 is arranged radially outward of the upper vane ring 30. The adjustment ring 36 is in mechanical association with the plurality of vanes 28 such that rotary motion of the adjustment ring 36, with respect to the upper vane ring 30, provides simultaneous pivotal movement to each vane of the plurality of vanes 28, as explained in more detail below.

In particular, each vane post 34 penetrates the upper vane ring 30 exposing a head 38 of each vane post 34 such that the head 38 projects past the upper vane ring 30 in the axial direction. A plurality of vane levers 40 is operative association with, and arranged around, the adjustment ring 36 such that each vane lever of the plurality of vane levers 40 is circumferentially spaced apart from each other. More specifically, as illustrated in FIG. 4, each vane lever of the plurality of vane levers 40 includes an arm 42, which is received by a corresponding aperture 44 disposed through the adjustment ring 36. Moreover, each vane lever of the plurality of vane levers 40 operatively couples the adjustment ring 36 to the head 38 of a corresponding vane post 34.

As both the upper vane ring 30 and the lower vane ring 32 are secured to the turbine housing 16, an actuator 46 may actuate the adjustment ring 36 to rotate, with respect to the upper vane ring 30, in one direction or the other, as illustrated by a double arrow 48, causing each vane lever of the plurality of vane levers 40 to also rotate in the one direction or the other, respectively, which in turn rotates each vane post 34 thereby causing each corresponding vane of the plurality of vanes 28 to pivot between an open position and a closed position, respectively, as described in more detail below. In such an arrangement, the simultaneous and unison pivoting of each vane of the plurality of vanes 28, via the actuator 46 actuating the adjustment ring 36, may regulate the air flowing to the turbine wheel 24. In some embodiments, the actuator 46 is either a brushed or a brushless electronic actuator, which may include an electronic board, a gear box, a motor and an output shaft or lever.

In an exemplary embodiment, as illustrated in FIG. 3, the turbocharger 10 is utilized with the engine 12 and an aftertreatment system 50. The engine 12 includes an air intake 52 and an exhaust passage 54. The air intake 52 is in fluid communication with the compressor housing 14 via an air cooler 56 and an intake air throttle 58. The air cooler 56 is downstream of the compressor housing 14 and upstream of the intake air throttle 58, which is upstream of the air intake 52 of the engine 12. The exhaust passage 54 of the engine 12 is upstream of, and in fluid communication with, the turbine housing 16.

The aftertreatment system 50 is downstream of, and in fluid communication with, the turbine housing 16. In some embodiments, the aftertreatment system 50 includes a diesel oxidation catalyst 60, a diesel particulate filter 62, and selective catalytic reduction 64. In such embodiments, the diesel oxidation catalyst 60 is downstream of the turbine housing 16 and upstream of the diesel particulate filter 62 with the selective catalytic reduction 64 downstream of the diesel particulate filter 62.

Moreover, the engine 12 is in communication with an electronic control unit 66. The electronic control unit 66 is configured to monitor the engine 12. In some embodiments, the electronic control unit 66 includes a processor 68, which can be implemented by one or more microprocessors or controllers from any desired family or manufacturer. The processor 68 includes a local memory 70 and is in communication with a main memory including a read-only memory 72 and a random access memory 74 via a bus 76. The random access memory 74 may be implemented by Synchronous Dynamic Random Access Memory (SDRAM), Dynamic Random Access Memory (DRAM), RAMBUS Dynamic Random Access Memory (RDRM) and/or any other type of random access memory device. The read-only memory 72 may be implemented by a hard drive, flash memory and/or any other desired type of memory device. The electronic control unit 66 also includes input/output ports 78 in communication with the processor 68 via the bus 76.

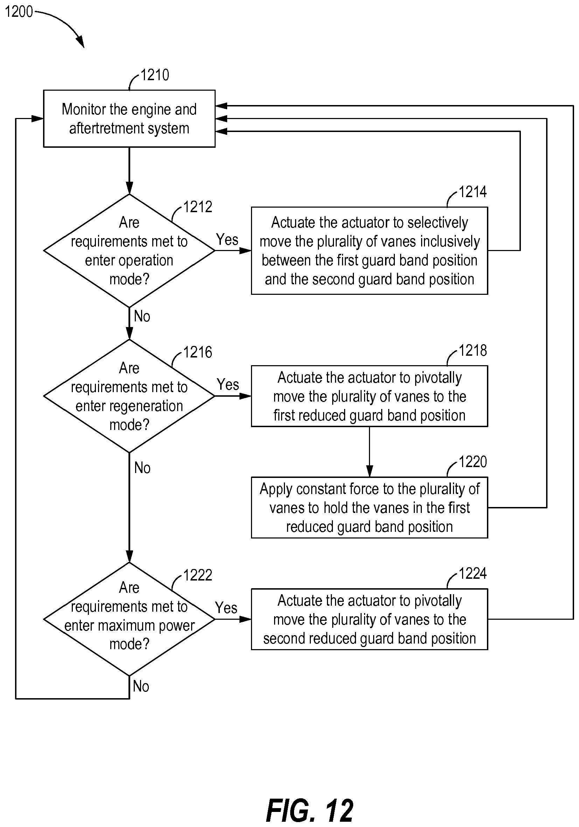

In some embodiments, the electronic control unit 66 is used to execute machine readable instructions. For example, the electronic control unit 66 may execute machine readable instructions to perform the sample sequence illustrated in flowchart 1200 in FIG. 12. In such examples, the machine readable instructions comprise a program for execution by the processor 68. The program may be embodied in software stored on a tangible computer readable medium such as a CD-ROM, a floppy disk, a hard drive, a digital versatile disk (DVD), a Blu-ray™ disk, or a memory associated with the processor 68, but the entire program and/or parts thereof could alternatively be executed by a device other than the processor 68 and/or embodied in firmware or dedicated hardware.

The electronic control unit 66 is also in communication with the actuator 46 and the aftertreatment system 50. The electronic control unit 66 is configured to monitor the aftertreatment system 50 for airflow restriction therethrough. Moreover, the electronic control unit 66 is configured to transmit mode signals 67 to the engine 12 and the actuator 46, such as, but not limited to, operation mode, regeneration mode, and maximum engine power mode signals. For example, the electronic control unit 66 may monitor and determine that the aftertreatment system 50 is clogged and, under certain engine conditions, such as during idle, transmit the regeneration mode signal to the actuator 46.

In particular, the actuator 46 is configured to, responsive to receiving the mode signals from the electronic control unit 66, actuate the plurality of vanes 28 to pivotally move. With reference to FIGS. 4-7, the movement of the plurality of vanes 28 based on an operation mode, a regeneration mode, and a maximum engine power mode corresponding to the operation mode signal, the regeneration mode signal, and the maximum engine power mode signal, respectively, will be explained in more detail below. For instance, the plurality of vanes 28 is capable of pivoting inclusively between a first end-stop position 80, as illustrated in FIG. 4, and a second end-stop position 82, as illustrated in FIG. 5, defining an end-stop span 84. In some embodiments, the first end-stop position 80 is a fully closed position such that each vane of the plurality of vanes 28 is in mechanical contact with an adjacent vane while the second end-stop position 82, on the other hand, is a fully opened position such that the arm 42 of each vane lever of the plurality of vane levers 40 is in contract with an arm stop 86 of the adjustment ring 36. Each arm stop 86 is disposed adjacent its corresponding aperture 44 of the adjustment ring 36.

Furthermore, the actuator 46 is configured to, responsive to receiving the operation mode signal (e.g., when the engine 12 is operating at normal conditions) from the electronic control unit 66, maintain the actuator 46 at a predetermined actuator power level and actuate the plurality of vanes 28 to selectively move inclusively between a first guard band position 88, as illustrated in FIG. 6, and a second guard band position 90, as illustrated in FIG. 7, defining a guard band span 92. In some embodiments, the guard band span 92 is less than the end-stop span 84. In some other embodiments, the guard band span 92 is limited to a range that is 4% to 6% less than a range of the end-stop span 84.

The actuator 46 is further configured to, responsive to receiving a first mode signal, such as but not limited to the regeneration mode signal (e.g., when the engine 12 is operating at idling conditions and the aftertreatment system 50 is determined to be clogged), from the electronic control unit 66, increase the predetermined actuator power level and actuate the plurality of vanes 28 to pivotally move to a first reduced guard band position 94. The first reduced guard band position 94 is inclusively between the first end-stop position 80 and the first guard band position 88.

The actuator 46 is also further configured to, responsive to receiving a second mode signal, such as but not limited to the maximum engine power mode signal (e.g., when the engine 12 is operating at maximum engine power conditions), from the electronic control unit 66, increase the predetermined actuator power level and actuate the plurality of vanes 28 to pivotally move to a second reduced guard band position 96. The second reduced guard band position 96 is inclusively between the second end-stop position 82 and the second guard band position 90. A reduced guard band span 98 is defined as the distance between the first reduced guard band position 94 and the second reduced guard band position 96. In some embodiments, the second reduced guard band span 96 is inclusively between 0% and 4% less than the end-stop span 84.

While the first mode signal and the second mode signal, which correspond to the actuator 46 operating in a first mode and a second mode, respectively, are exemplarily described above as being the regeneration mode signal and the maximum engine power mode signal, respectively, it should be understood that the first mode signal and the second mode signal could be any predetermined mode signal transmitted via the electronic control unit 66.

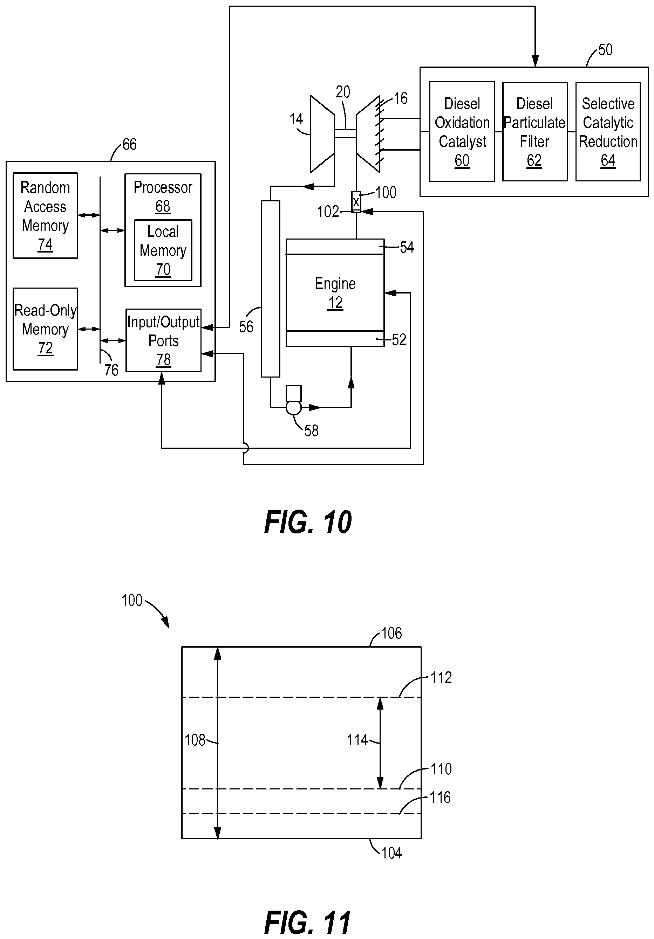

In an alternative exemplary embodiment, as illustrated in FIG. 10, the fluid diverter 26 includes a wastegate valve 100 instead of the plurality of vanes 28. The wastegate valve 100 is disposed downstream of the exhaust passage 54 and upstream of the turbine housing 16. The wastegate valve 100 is in fluid communication with the exhaust passage 54 and the turbine housing 16 and is configured to adjust airflow passing to the turbine wheel 24. A wastegate actuator 102 is in operative association with the wastegate valve 100. In some embodiments, the wastegate actuator 102 is a pneumatic actuator. Similar to the actuator 46, the wastegate actuator 102 is in communication with the electronic control unit 66 and is configured to, responsive to receiving the mode signals 67 from the electronic control unit 66, actuate the wastegate valve 100.

As schematically illustrated in FIG. 11, the wastegate actuator 102 is configured to actuate the wastegate valve 100 to move inclusively between a first wastegate end-stop position 104 (e.g. closed position) and a second wastegate end-stop 106 (e.g. opened position) defining a wastegate end-stop span 108. Further, the wastegate actuator 102 is configured to, responsive to receiving the operation mode signal from the electronic control unit 66, maintain the wastegate actuator 102 at a predetermined wastegate actuator power level and actuate the wastegate valve 100 to selectively move inclusively between a first wastegate guard band position 110 and a second wastegate guard band position 112 defining a wastegate guard band span 114. In some embodiments, the wastegate guard band span 114 is less than the wastegate end-stop span 108. The wastegate actuator 102 is further configured to, responsive to receiving the first mode signal, such as the regeneration mode signal, from the electronic control unit 66, increase the predetermined wastegate actuator power level and actuate the wastegate valve 100 to move to a first reduced wastegate guard band position 116. The first reduced wastegate guard band position 116 is inclusively between the first wastegate end-stop position 104 and the first wastegate guard band position 110.

FIG. 12 illustrates a flowchart 1200 of a sample sequence which may be performed to control exhaust gas flow to the turbine wheel 24 of the turbocharger 10. The sequence may begin at a block 1210, which illustrates the step of monitoring the engine 12 and the aftertreatment system 50 via the electronic control unit 66. At decision box 1212, the electronic control unit 66 determines whether the requirements are met to enter the operation mode. If the requirements are met, then the electronic control unit 66 transmits the operation mode signal to actuate the actuator 46 to selectively move the plurality of vanes 28 inclusively between the first guard band position 88 and the second guard band position 90 and maintain the actuator 46 at the predetermined actuator power level, as illustrated at block 1214. After block 1214, the sequence proceeds back to block 1210. If the requirements of decision box 1212 are not met, then the sequence proceeds to decision box 1216.

At decision box 1216, the electronic control unit 66 determines whether the requirements are met to enter the first mode, such as the regeneration mode. If the requirements are met, then the electronic control unit 66 transmits the first mode signal to actuate the actuator 46 to pivotally move the plurality of vanes 28 to the first reduced guard band position 94 and increase the predetermined actuator power level, as illustrated at block 1218. Further, as depicted at block 1220, the electronic control unit 66 may command the actuator 46 to apply a constant force to the plurality of vanes 28 to the hold the plurality of vanes 28 in the first reduced guard band position 94. In some embodiments, the constant force is applied to the plurality of vanes 28 via a calibrateable motor, power, torque, or current value to the actuator 46. After block 1220, the sequence proceeds to back to block 1210. If the requirements of decision box 1216 are not met, then the sequence proceeds to decision box 1222.

At decision box 1222, the electronic control unit 66 determines whether the requirements are met to enter the second mode, such as the maximum engine power mode. If the requirements are met, then the electronic control unit 66 transmits the second mode signal to actuate the actuator 46 to pivotally move the plurality of vanes 28 to the second reduced guard band position 96 and increase the predetermined actuator power level, as depicted in block 1224. In some embodiments, a constant force is further applied to the plurality of vanes 28 via a calibrateable motor, power, torque, or current value to the actuator 46. If the requirements of decision box 1222 are not met, then the sequence proceeds back to block 1210.

### Industrial Applicability

Based on the foregoing, it can be seen that the present disclosure can find applicability in many industries such as but not limited to those employing an internal combustion engine in various turbo machines such as, but not limited to, automobiles, trucks, aircraft, locomotives, ships, and auxiliary power generators. Through the novel teachings set forth above, the actuator 46 is commanded by the electronic control unit 66 to actuate the plurality of vanes 28, in the first mode, such as the regeneration mode, to increase the predetermine actuator power level and pivotally move to the first reduced guard band position 94. In this manner, the plurality of vanes 28 is closed further beyond the first guard band position 88 establishing a smaller passage between the plurality of vanes 28 and restricting the exhaust gas flow to create the heat necessary to unclog the aftertreatment system 50. As such, the increased heat may reduce the regeneration mode time required for unclogging the aftertreatment system 50. Furthermore, through the novel teachings set forth above, a constant force is applied to the plurality of vanes 28 holding the plurality of vanes in the first reduced guard band position 94 to ensure that each vane of the plurality of vanes 28 does not vibrate against an adjacent vane thereby reducing rattling and wear.

In operation of the turbocharger 10, the electronic control unit 66 monitors the engine 12 and the aftertreatment system 50 and may determine that the conditions are met to enter the first mode, such as the regeneration mode. After determining that the first mode conditions are met, the electronic control unit 66 transmits the first mode signal to the actuator 46 to increase the predetermined actuator power level and actuate the plurality of vanes 28 to the first reduced guard band position 94. In this first reduced guard band position 94, the plurality of vanes 28 are positioned further beyond the first guard band position 88 creating a smaller passage between the plurality of vanes 28. This restricts the exhaust gas flow and creates heat to unclog the aftertreatment system 50.

With the plurality of vanes 28 in the first reduced guard band position 94, the plurality of vanes 28 are closer to one another and may rattle or vibrate against one another, however, the electronic control unit 66 commands the actuator 46 to apply a constant force to the plurality of vanes 28 to hold the plurality of vanes 28 in the first reduced guard band position 94 and against one another to ensure that the rattling and vibration is reduced or eliminated.

Moreover, the electronic control unit 66 is also configured to determine when conditions are met to enter the second mode, such as the maximum engine power mode. After determining that the second mode conditions are met, the electronic control unit 66 transmits the second mode signal to the actuator 46 to increase the predetermine actuator power level and actuate the plurality of vanes 28 to the second reduced guard band position 94 to allow sufficient exhaust gas flow. With the plurality of vanes 28 in the second reduced guard band position 96, the arm 42 of each vane lever of the plurality of vane levers 40 is in contact against the arm stop 86 of the adjustment ring 36. In this manner, the electronic control unit 66 commands the actuator 46 to apply a constant force to the adjustment ring 36 to hold the arm 42 against the arm stop 86 to ensure that rattling and vibration is reduced or eliminated.

## Claims

1. A variable position device (25) for a turbocharger (10) including a turbine wheel (24), the variable position device (25) comprising:
a fluid diverter (26) for diverting exhaust gas flow to the turbine, the fluid diverter (26) moveable inclusively between a first end-stop position (80, 104) and a second end-stop position (82, 106), wherein the first and second end-stop positions define an end-stop span (84, 108); and
an actuator (46) in operable association with the fluid diverter (26),
the actuator (46) configured to, in an operation mode, selectively move the fluid diverter (26) inclusively between a first guard band position (88, 110) and a second guard band position (90, 112), wherein the first and second guard band positions define a guard band span (92, 114) wherein the guard band span (92, 114) is less than the end-stop span (84, 108),
the actuator (46) configured to, in a first mode, move the fluid diverter to a first reduced guard band position (94, 116), wherein the first reduced guard band position (94, 116) is inclusively between the first end-stop position (80, 104) and the first guard band position (88, 110), and apply a constant force to the fluid diverter (26) to hold the fluid diverter (26) in the first reduced guard band position (94, 116).

2. The variable position device (25) of claim 1, wherein the fluid diverter (26) is a wastegate valve.

3. The variable position device (25) of claim 1, wherein the fluid diverter (26) is a plurality of vanes (28) pivotally movable between the first end-stop and the second end-stop.

4. The variable position device (25) of claim 3, wherein the actuator (46) is one of a brushless electronic actuator and a brushed electronic actuator.

5. The variable position device (25) of claim 3, wherein the operation mode corresponds to an engine (12) operating at a standard power condition and the first mode corresponds to the engine (12) operating at aftertreatment regeneration conditions, the engine (12) in operable association with the actuator (46).

6. The variable position device (25) of claim 5, wherein, in the first reduced guard band position (94), each vane of the plurality of vanes (28) is in mechanical contact with an adjacent vane of the plurality of vanes (28).

7. The variable position device (25) of claim 3, wherein the actuator (46) is configured to, in a second mode, move the plurality of vanes (28) to a second reduced guard band position (96), wherein the second reduced guard band position (96) is inclusively between the second end-stop position (82) and the second guard band position (90).

8. The variable position device (25) of claim 3, wherein the actuator (46), in the first mode, applies the constant force to the plurality of vanes (28) via one of a calibrateable motor power, torque, or current value of the actuator (46).

9. The variable position device (25) of claim 3, wherein the actuator (46) is further configured to, in the first mode, increase a predetermined actuator power level of the actuator (46).

10. The variable position device (25) of claim 7, wherein the actuator (46) is further configured to, in the second mode, apply a constant force to the plurality of vanes (28) to hold the plurality of vanes (28) in the second reduced guard band position (96).

11. The variable position device (25) of claim 7, further including an adjustment ring (36) in operable association with the plurality of vanes (28) via a corresponding plurality of vane levers (40) and wherein, in the second reduced guard band position (96), an arm (42) of each vane lever of the plurality of vane levers (40) is in mechanical contact with an arm stop (86) of the adjustment ring (36).

12. The variable position device (25) of claim 7, wherein the actuator (46), in the second mode, applies constant force to the adjustment ring (36) via one of a calibrateable motor power, torque, or current value of the actuator.

## Patentansprüche

1. Eine Vorrichtung mit variabler Position (25) für einen Turbolader (10) mit einem Turbinenrad (24), wobei die Vorrichtung mit variabler Position (25) Folgendes umfasst:
einen Fluidumleiter (26) zum Umleiten eines Abgasstroms zur Turbine, wobei der Fluidumleiter (26) zwischen einschließlich einer ersten Endanschlagsposition (80, 104) und einer zweiten Endanschlagsposition (82, 106) bewegbar ist, wobei die erste und die zweite Endanschlagsposition eine Endanschlagsspanne (84, 108) definieren; und
einen Aktuator (46), der mit dem Fluidumleiter (26) in Wirkverbindung steht,
wobei der Aktuator (46) ausgelegt ist, um in einem Betriebsmodus den Fluidumleiter (26) zwischen einschließlich einer ersten Schutzbandposition (88, 110) und einer zweiten Schutzbandposition (90, 112) zu bewegen, wobei die erste und die zweite Schutzbandposition eine Schutzbandspanne (92, 114) definieren, wobei die Schutzbandspanne (92, 114) kleiner als die Endanschlagsspanne (84, 108) ist,
wobei der Aktuator (46) ausgelegt ist, um in einem ersten Modus den Fluidumleiter in eine erste reduzierte Schutzbandposition (94, 116) zu bewegen, wobei die erste reduzierte Schutzbandposition (94, 116) zwischen einschließlich der ersten Endanschlagsposition (80, 104) und der ersten Schutzbandposition (88, 110) liegt und eine konstante Kraft auf den Fluidumleiter (26) ausübt, um den Fluidumleiter (26) in der ersten reduzierten Schutzbandposition (94, 116) zu halten.

2. Die Vorrichtung mit variabler Position (25) nach Anspruch 1, wobei der Fluidumleiter (26) ein Wastegate-Ventil ist.

3. Die Vorrichtung mit variabler Position (25) nach Anspruch 1, wobei der Fluidumleiter (26) eine Mehrzahl von Schaufeln (28) ist, die zwischen dem ersten Endanschlag und dem zweiten Endanschlag drehbar bewegbar sind.

4. Die Vorrichtung mit variabler Position (25) nach Anspruch 3, wobei der Aktuator (46) eines von einem bürstenlosen elektronischen Aktuator oder einem bürstenbehafteten elektronischen Aktuator ist.

5. Die Vorrichtung mit variabler Position (25) nach Anspruch 3, wobei der Betriebsmodus einem Motor (12) entspricht, der unter einer Standardleistungsbedingung arbeitet, und der erste Modus dem Motor (12) entspricht, der unter Nachbehandlungsregenerationsbedingungen arbeitet, wobei der Motor (12) mit dem Aktuator (46) in Wirkverbindung steht.

6. Die Vorrichtung mit variabler Position (25) nach Anspruch 5, wobei in der ersten reduzierten Schutzbandposition (94) jede Schaufel der Mehrzahl von Schaufeln (28) in mechanischem Kontakt mit einer benachbarten Schaufel der Mehrzahl von Schaufeln (28) steht.

7. Die Vorrichtung mit variabler Position (25) nach Anspruch 3, wobei der Aktuator (46) ausgelegt ist, um in einem zweiten Modus die Mehrzahl von Schaufeln (28) in eine zweite reduzierte Schutzbandposition (96) zu bewegen, wobei die zweite reduzierte Schutzbandposition (96) zwischen einschließlich der zweiten Endanschlagsposition (82) und der zweiten Schutzbandposition (90) liegt.

8. Die Vorrichtung mit variabler Position (25) nach Anspruch 3, wobei der Aktuator (46) im ersten Modus die konstante Kraft über eines von einer kalibrierbaren Motorleistung, Drehmoment oder Stromwert des Aktuators (46) auf die Mehrzahl von Schaufeln (28) ausübt.

9. Die Vorrichtung mit variabler Position (25) nach Anspruch 3, wobei der Aktuator (46) ferner ausgelegt ist, um im ersten Modus einen vorbestimmten Aktuatorleistungspegel des Aktuators (46) zu erhöhen.

10. Die Vorrichtung mit variabler Position (25) nach Anspruch 7, wobei der Aktuator (46) ferner ausgelegt ist, um im zweiten Modus eine konstante Kraft auf die Vielzahl von Schaufeln (28) auszuüben, um die Mehrzahl von Schaufeln (28) in der zweiten reduzierten Schutzbandposition (96) zu halten.

11. Die Vorrichtung mit variabler Position (25) nach Anspruch 7, ferner beinhaltend einen Einstellring (36), der über eine entsprechende Mehrzahl von Schaufelhebeln (40) mit der Mehrzahl von Schaufeln (28) in Wirkverbindung steht, und wobei in der zweiten reduzierten Schutzbandposition (96) ein Arm (42) jedes Schaufelhebels der Mehrzahl von Schaufelhebeln (40) in mechanischem Kontakt mit einem Armanschlag (86) des Einstellrings (36) steht.

12. Die Vorrichtung mit variabler Position (25) nach Anspruch 7, wobei der Aktuator (46) im zweiten Modus über eines von einer kalibrierbaren Motorleistung, Drehmoment oder Stromwert des Aktuators eine konstante Kraft auf den Einstellring (36) ausübt.

## Revendications

1. Dispositif à position variable (25) pour un turbocompresseur (10) incluant une roue de turbine (24), le dispositif à position variable (25) comprenant :
un dérivateur de fluide (26) pour dériver un courant de gaz d'échappement vers la turbine, le dérivateur de fluide (26) étant mobile inclusivement entre une première position d'arrêt final (80, 104) et une deuxième position d'arrêt final (82, 106), les première et deuxième positions d'arrêt final définissant un écart d'arrêt final (84, 108) ; et
un actionneur (46) en association fonctionnelle avec le dérivateur de fluide (26),
l'actionneur (46) étant configuré pour, dans un mode de fonctionnement, déplacer sélectivement le dérivateur de fluide (26) inclusivement entre une première position de bande de garde (88, 110) et une deuxième position de bande de garde (90, 112), les première et deuxième positions de bande de garde définissant un écart de bande de garde (92, 114), l'écart de bande de garde (92, 114) étant inférieur à l'écart d'arrêt final (84, 108),
l'actionneur (46) étant configuré pour, dans un premier mode, déplacer le dérivateur de fluide vers une première position de bande de garde réduite (94, 116), la première position de bande de garde réduite (94, 116) étant inclusivement entre la première position d'arrêt final (80, 104) et la première position de bande de garde (88, 110), et appliquer une force constante au dérivateur de fluide (26) afin de maintenir le dérivateur de fluide (26) dans la première position de bande de garde réduite (94, 116).

2. Dispositif à position variable (25) selon la revendication 1, dans lequel le dérivateur de fluide (26) est une soupape de décharge.

3. Dispositif à position variable (25) selon la revendication 1, dans lequel le dérivateur de fluide (26) est une pluralité de vannes (28) mobiles par pivotement entre le premier arrêt final et le deuxième arrêt final.

4. Dispositif à position variable (25) selon la revendication 3, dans lequel l'actionneur (46) est l'un d'un actionneur électronique sans balais ou d'un actionneur électronique à balais.

5. Dispositif à position variable (25) selon la revendication 3, dans lequel le mode de fonctionnement correspond à un moteur (12) fonctionnant dans une condition de puissance standard et le premier mode correspond au moteur (12) fonctionnant dans des conditions de régénération post-traitement, le moteur (12) étant en association fonctionnelle avec l'actionneur (46).

6. Dispositif à position variable (25) selon la revendication 5, dans lequel, dans la première position de bande de garde réduite (94), chaque vanne de la pluralité de vannes (28) est en contact mécanique avec une vanne adjacente de la pluralité de vannes (28).

7. Dispositif à position variable (25) selon la revendication 3, dans lequel l'actionneur (46) est configuré pour, dans un deuxième mode, déplacer la pluralité de vannes (28) vers une deuxième position de bande de garde réduite (96), la deuxième position de bande de garde réduite (96) étant inclusivement entre la deuxième position d'arrêt final (82) et la deuxième position de bande de garde (90).

8. Dispositif à position variable (25) selon la revendication 3, dans lequel l'actionneur (46), dans le premier mode, applique la force constante à la pluralité de vannes (28) par l'intermédiaire de l'une d'une puissance de moteur, couple ou valeur de courant calibrable de l'actionneur (46).

9. Dispositif à position variable (25) selon la revendication 3, dans lequel l'actionneur (46) est en outre configuré pour, dans le premier mode, augmenter un niveau de puissance d'actionneur prédéterminé de l'actionneur (46).

10. Dispositif à position variable (25) selon la revendication 7, dans lequel l'actionneur (46) est en outre configuré pour, dans le deuxième mode, appliquer une force constante à la pluralité de vannes (28) afin de maintenir la pluralité de vannes (28) dans la deuxième position de bande de garde réduite (96).

11. Dispositif à position variable (25) selon la revendication 7, incluant en outre une bague d'ajustement (36) en association fonctionnelle avec la pluralité de vannes (28) par l'intermédiaire d'une pluralité correspondante de leviers de vanne (40) et dans lequel, dans la deuxième position de bande de garde réduite (96), un bras (42) de chaque levier de vanne de la pluralité de leviers de vanne (40) est en contact mécanique avec un arrêt de bras (86) de la bague d'ajustement (36).

12. Dispositif à position variable (25) selon la revendication 7, dans lequel l'actionneur (46), dans le deuxième mode, applique une force constante à la bague d'ajustement (36) par l'intermédiaire de l'une d'une puissance de moteur, couple ou valeur de courant calibrable de l'actionneur.
